# EUROPÄISCHE PATENTANMELDUNG

(11) **EP 2 533 389 A2**
(43) Veröffentlichungstag der Anmeldung: **12.12.2012**
(21) Anmeldenummer: 12002956.6
(22) Anmeldetag: 27.04.2012
(51) Int. Cl.: H02J 3/00, H02J 13/00, G06Q 50/06

(54) **Verfahren zur Verteilung von elektrischer Energie in einem Stromnetzwerk mit einer Vielzahl von Verteilungsnetzzellen**

(30) Priorität: 09.06.2011 DE 102011106114
(71) Anmelder: MVV Energie AG, 68159 Mannheim (DE)
(72) Erfinder: Schäfer, Daniel, 76135 Karlsruhe (DE); Kießling, Andreas, 68723 Oftersheim (DE); Thomann, Robert Dr., 69115 Heidelberg (DE)
(74) Vertreter: Kesselhut, Wolf

(57) **Zusammenfassung**

Ein Verfahren zur Verteilung von elektrischer Energie in einem Stromnetzwerk mit einer Vielzahl von selbständig führbaren Verteilungsnetzzellen (4.1, 4.2,) von denen eine jede Verteilungsnetzzelle eine Vielzahl von selbständigen elektrischen Verbraucher/Erzeugereinheiten (8.1.1 bis 8.n.m) enthält, die elektrische Energie aus der Verteilungsnetzzelle entnehmen und/oder in die Verteilungsnetzzelle einspeisen, und die jeweils über eine bidirektionale Kommunikationsschnittstelle (10) Informationen in Form von Preis-/Anreizkurven und Bedarfs-/Bereitstellungskurven mit einer dezentralen Berechnungseinheit austauschen, zeichnet sich dadurch aus, dass jede Verteilungsnetzzelle jeweils einen Netzautomaten (14) aufweist, dem eine erste Vielzahl von eigenständigen Berechnungseinheiten (12.1 bis 12.n) zugeordnet ist, von denen eine jede Berechnungseinheit (12.1 bis 12.n) jeweils über eine bidirektionale Kommunikationsschnittstelle (10) mit einer zweiten Vielzahl von Verbraucher-/Erzeugereinheiten (8.1.1 bis 8.n.m) verbunden ist, dass jede der ersten Vielzahl von Berechnungseinheiten (12.1 bis 12.n) auf der Basis prognostizierter Marktpreiskurven (20) eine der Verbraucher-/Erzeugereinheit (8.1.1 bis 8.n.m) zugeordnete vorläufige Gesamtpreiskurve (22) für die während eines vorgegebenen Zeitraums (T) entnommene oder eingespeiste Menge an elektrischer Energie ermittelt und diese der zweiten Vielzahl von zugeordneten Verbraucher-/Erzeugereinheiten (8.1.1 bis 8.n.m) über die jeweilige bidirektionale Kommunikationsschnittstelle (10) zuführt, dass jede der bidirektionalen Kommunikationsschnittstellen (10) aus der vorläufigen Gesamtpreiskurve (22) eine voraussichtliche Lastbedarfs/Einspeisekurve (24) für die von der jeweiligen Verbraucher/Erzeugereinheit (8.1.1 bis 8.n.m) in dem vorgegebenen Zeitraum (T) benötigte oder angebotene elektrische Leistung ermittelt und diese zurück an die zugehörige Berechnungseinheit (12.1 bis 12.n) übersendet, dass jede der ersten Vielzahl von Berechnungseinheiten (12.1 bis 12.n) aus den voraussichtlichen Lastbedarfskurven/Einspeisekurven (24) aller ihr zugeordneten Verbraucher/Erzeugereinheiten (8.1.1 bis 8.n.m) eine Gesamtbedarfskurve/Gesamteinspeisekurve (26.1 bis 26.n) für die in dem Zeitraum voraussichtlich benötigte oder gelieferte Menge an elektrischer Energie bestimmt, dass jede der ersten Vielzahl von Berechnungseinheiten (12.1 bis 12.n) die von ihr bestimmte Gesamtbedarfskurve/Gesamteinspeisekurve (26.1 bis 26.n) an den Netzautomaten (14) übermittelt, und dass der Netzautomat (14) aus den ihm von der ersten Vielzahl von Berechnungseinheiten (12.1 bis 12.n) übersandten voraussichtlichen Gesamtbedarfskurven/Gesamteinspeisekurven (26.1 bis 26.n) eine kumulierte Gesamtbedarfskurve/Gesamteinspeisekurve (28) für die Verteilungsnetzzelle bestimmt und auf Basis von dieser ermittelt, ob der prognostizierte Energiefluss in der Verteilungsnetzzelle einen vorgegebenen Wert überschreitet.

## Beschreibung

Die Erfindung betrifft Verfahren zur Verteilung von elektrischer Energie in einem Stromnetzwerk mit einer Vielzahl von selbständig führbaren Verteilungsnetzzellen gemäß dem Oberbegriff von Anspruch 1.

Bei der Verteilung von elektrischer Energie wird diese in der Regel von zentralen Kraftwerken aus über Hoch- und Mittelspannungsnetze und entsprechende Transformatoren in die Verteilungsnetze mit einer Vielzahl von Niederspannungsnetzen eingespeist, in denen die elektrische Energie von einer Vielzahl von Verbrauchern abgenommen wird. Der Stromfluss ist bei der zuvor beschriebenen Art der zentralen Verteilung der Energie stets von oben nach unten gerichtet, wodurch es in der Vergangenheit keine Probleme gab, den Strom den jeweiligen Bereichen der Verteilungsnetze zuzuleiten, in denen dieser gebraucht wurde.

Mit der ständig wachsenden Zahl von regionalen Energieerzeugern, wie z.B. Blockheizkraftwerken, Photovoltaikanlagen oder Kleinwindanlagen etc., die in den Verteilungsnetzen dezentral zusammen mit den Verbrauchern angeordnet sind, besteht zunehmend das Problem, dass der von den dezentralen Erzeugern produzierte Strom ungeregelt und zufällig insbesondere auch in die Niederspannungsnetze der Verteilungsnetze eingespeist wird.

Mit der fortschreitenden Nutzung dieser Erzeuger entwickelt sich ein bidirektionaler Energiefluss zwischen übergeordneten Stromnetzen und dem Verteilungsnetz sowie zwischen Verteilungsnetz und den Liegenschaften der Netznutzer. Der Einfluss dieses bidirektionalen Flusses im Netz wird so relevant, beispielsweise durch Spannungsverletzungen, wenn zu hohe Leistungen von Photovoltaikanlagen in Bereichen des Verteilungsnetzes eingespeist werden, ohne dass genügend Verbraucher in der gleichen Region diese Leistung benötigen. Hierdurch wird ein aktives Management dezentraler Anlagen erforderlich. Die aktuell unkontrollierte Einspeisung im dezentralen Bereich ist durch ein dezentrales Energiemanagement zu überwinden.

Hinzu kommt, dass der Betreiber des physikalischen Leitungsnetzes und der Anbieter der elektrischen Energie in einigen Ländern, wie beispielsweise Deutschland, mitunter nicht in einer juristischen Person zusammen fallen, so dass die physikalische Regelung der elektrischen Energieflüsse innerhalb eines Verteilungsnetzes im Wesentlichen unabhängig von den wirtschaftlichen Größen, wie insbesondere der aktuellen Höhe des Strompreises, ist, der für die Verbraucher zunehmend als Anreiz herangezogen wird, die überschüssige elektrische Energie im Falle einer Überkapazität zu verbrauchen.

Weiterhin ist es bekannt, den Energiefluss innerhalb von kleineren selbstständigen Verbraucher-/Erzeugereinheiten selbständig zu regeln, wobei die lokalen Erzeuger-/Verbrauchereinheiten, wie z.B. einzelne Haushalte oder gewerbliche oder kommerzielle Objekte als Liegenschaften der Netznutzer, über ein bidirektionales Energiemanagement-Interface - das auch als BEMI bezeichnet wird - an ein Niederspannungsnetz angeschlossen sind und die Informationen über den geplanten Bedarf an elektrischer Energie mit einem zentralen Rechner über ein Datennetz austauschen, um die elektrische Energie nach Möglichkeit dann zu beziehen, wenn der Preis für diese am günstigsten ist.

In diesem Zusammenhang sind aus der europäischen Patentanmeldung EP 1 339 153 A2 eine Vorrichtung und ein Verfahren bekannt, mit denen ein autonomer Haushalt über eine bidirektionale Kommunikationsschnittstelle an das Niederspannungsnetz im Verteilungsnetz angeschlossen werden kann. Die Schrift gibt keinen Hinweis darauf, wie der Energiefluss beim Anschluss einer Vielzahl von BEMIs innerhalb des Niederspannungsnetzes geregelt wird, bei der das physikalische Leitungsnetz und die einzelnen Stromanbieter, von denen die BEMIs die aktuelle Preisinformation beziehen, welche sie zur Optimierung der Energiekosten in der jeweiligen Verbraucher-/Erzeugereinheit heranziehen, getrennt sind.

Anders ausgedrückt ergibt sich durch die oftmals durch gesetzliche Vorschriften vorgegebene Trennung der Betreiber des physikalischen Leitungsnetzes und der Stromanbieter, die die elektrische Energie zu einem jeweiligen Marktpreis anbieten, das technische Problem, dass die für sich genommene selbständige Regelung des physikalischen Stromfluss in den Verteilungsnetzen und die für sich genommene ebenfalls selbständige preis- oder anreizbasierte indirekte Beeinflussung des physikalischen Stromflusses über die BEMIs nicht aufeinander abgestimmt sind. Hinzu kommt, dass die Vielzahl von BEMIs innerhalb eines Verteilungsnetzes auch untereinander nicht dahingehend miteinander kommunizieren, dass der physikalische Stromfluss innerhalb des Verteilungsnetzes möglichst ausgeglichen ist. Hierdurch ergeben sich insbesondere bei einer zunehmenden Anzahl von BEMIs, die elektrische Energie zu variablen, nicht von vorn herein festgelegten Zeitpunkten in die Niederspannungsbereiche der Verteilungsnetze einspeisen, unerwünschte gleichzeitige Schwankungen der Energieflüsse innerhalb der Niederspannungsbereiche der Verteilungsnetze, die mitunter zu störenden Spannungsschwankungen oder gar zu Beschädigungen von elektrischen Geräten, die in den betreffenden Verteilungsnetzbereichen betrieben werden, führen können. Zusätzlich führt der hohe Anteil dezentraler Erzeugungsanlagen zu in verschiedenen Niederspannungsbereichen der Verteilungsnetze unterschiedlichen Verletzungen der Stromqualität, denen mit unterschiedlichen Maßnahmen zu begegnen ist.

Die Grenzen der zentralen Steuerbarkeit und Kontrolle im Verteilungsnetz werden mit der oben beschriebenen Situation überschritten. Um die weitere Steuerbarkeit zu gewährleisten, ist Komplexität wieder zu reduzieren. Die Reduktion von Komplexität kann durch selbständige, aber gleichzeitig zum Gesamtsystem verbundene Strukturen, die intelligent und synergetisch handeln, erreicht werden. Deshalb wird in verschiedenen Ansätzen die Gliederung von Netzbereichen in Netzzellen vorgeschlagen. Netzzellen, beispielsweise im Niederspannungsbereich, sogenannte Verteilungsnetzzellen, können insbesondere die oben geschilderten Problematiken lösen. Das Verfahren kann jedoch auch auf anderen Spannungsebenenen des Verteilungsnetzes umgesetzt werden. Aktuell sind dabei hierarchische und netzwerkartige Verbindungsansätze der selbständigen Steuerungsstrukturen für ein dezentrales Energiemanagement in selbst organisierenden Netzzellen bekannt, die im Sinne einer hohen Synergie im Gesamtsystem aber immer von Rahmenbedingungen aus zentralen Netzführungsinstanzen ausgehen. Gemeinsam ist den verschiedenen Ansätzen der Gedanke eines dezentraleren Energiemanagements. Zielstellung des beschriebenen Verfahrens ist es deshalb, einen zellularen Netzbetrieb mit Verteilungsnetzzellen mit verteilter Automatisierung zu ermöglichen.

Demgemäß ist es eine Aufgabe der vorliegenden Erfindung, ein Verfahren zu schaffen, mit welchem sich der Energiefluss innerhalb einer Verteilungsnetzzelle eines elektrischen Stromnetzes, die eine Vielzahl von selbständigen elektrischen Verbraucher-/Erzeugereinheiten enthält, welche jeweils über eine bidirektionale Kommunikationsschnittstelle Informationen in Form von Preis- und/oder Anreizkurven mit einer dezentralen Berechnungseinheit austauschen und elektrische Energie in Abhängigkeit davon aus der Verteilungsnetzzelle entnehmen und/oder in die Verteilungsnetzzelle einspeisen, auch bei größeren Schwankungen zwischen eingespeister und entnommener elektrischer Energie in effizienter Weise regeln lässt.

Diese Aufgabe wird erfindungsgemäß durch die Merkmale von Anspruch 1 gelöst.

Gemäß der Erfindung zeichnet sich ein Verfahren zur Verteilung von elektrischer Energie in einem Stromnetzwerk mit einer Vielzahl von Verteilungsnetzzellen, die bevorzugt allesamt selbständig geführt werden, und von denen eine jede Verteilungsnetzzelle eine Vielzahl von selbständigen elektrischen Verbraucher-/Erzeugereinheiten enthält, die elektrische Energie aus der Verteilungsnetzzelle entnehmen und/oder in die Verteilungsnetzzelle einspeisen, und die jeweils über eine bidirektionale Kommunikationsschnittstelle Informationen in Form von Preis- und/oder Anreizkurven sowie insbesondere auch Steuerkurven und/oder Bedarfs- und Bereitstellungskurven mit einer dezentralen Berechnungseinheit austauschen, dadurch aus, dass jede Verteilungsnetzzelle jeweils einen Netzautomaten aufweist, dem eine erste Vielzahl von eigenständigen Berechnungseinheiten zugeordnet ist, von denen eine jede Berechnungseinheit jeweils über eine bidirektionale Kommunikationsschnittstelle mit einer zweiten Vielzahl von Verbraucher-/Erzeugereinheiten verbunden ist. Der Netzautomat kann beispielsweise ein Rechner und mit diesem verbundene und angesteuerte elektrische Schaltungs- und Regelungskomponenten umfassen, die z.B. in einem bevorzugt im oder nahe dem einer Verteilungsnetzzelle zugeordneten Transformator in einem Schaltschrank oder dergleichen angeordnet sind. Der Netzautomat kann weiterhin bekannte Sensoren und Schalter, die z.B. zu den Verbraucher-/Erzeugereinheiten einer Verteilungsnetzzelle sowie zwischen zwei Verteilungsnetzzellen angeordnet sind, umfassen, um den Stromfluss und/oder die Spannung und/oder die Frequenz im physikalischen Leitungsnetz zu erfassen und bei Bedarf den Stromfluss zwischen zwei Verteilungsnetzzellen oder zu den Verbraucher/Erzeugereinheiten über die Schalter zu verändern oder zu unterbrechen.

Jede der ersten Vielzahl von Berechnungseinheiten - die nachfolgend auch als Marktautomaten bezeichnet werden - errechnet eine prognostizierte Marktpreiskurve auf Basis externer Marktinformationen und bevorzugt auch auf Basis der Umweltsituationen wie z.B. der voraussichtlichen Sonneneinstrahlung oder der Regenmenge und Temperatur etc., ermittelt auf Basis der prognostizierten Marktpreiskurve eine der Verbraucher-/Erzeugereinheit zugeordnete vorläufige Gesamtpreiskurve, die bevorzugt auch die Netzpreiskurve für die während eines vorgegebenen Zeitraums entnommene oder eingespeiste Menge an elektrischer Energie mit einschließt. Die Gesamtpreiskurve, unter bevorzugtem Einschluss der Netzpreiskurve, d.h. des Preises für die Durchleitung der elektrischen Energie durch das physikalische Leitungsnetz innerhalb der Verteilungsnetzzelle, wird von jeder Berechnungseinheit der jeweiligen bidirektionale Kommunikationsschnittstelle der zweiten Vielzahl von zugeordneten Verbraucher-/Erzeugereinheiten zugeführt, die aus der vorläufigen Gesamtpreiskurve eine voraussichtliche Lastbedarfskurve oder Einspeisekurve für die von der jeweiligen Verbraucher-/Erzeugereinheit in dem vorgegebenen Zeitraum benötigte oder angebotene elektrische Leistung ermittelt. Nachdem die bidirektionale Kommunikationsschnittstelle die voraussichtliche Lastbedarfs/Einspeisekurve, die nachfolgend auch als Fahrplan bezeichnet wird, errechnet hat, wird diese zurück an die zugehörige Berechnungseinheit übersandt. Die Berechnungseinheit, die beispielsweise als bekannter Rechner, z.B. als PC oder auch als Server ausgestaltet sein kann, bestimmt aus den voraussichtlichen Lastbedarfskurven oder Einspeisekurven aller ihr zugeordneten Verbraucher-/Erzeugereinheiten eine voraussichtliche Gesamtbedarfskurve/Gesamteinspeisekurve für die in dem Zeitraum voraussichtlich benötigte oder gelieferte Menge an elektrischer Energie. Bei den voraussichtlichen Lastbedarfskurven/Einspeisekurven bzw. Gesamtbedarfskurven/Gesamteinspeisekurven handelt es sich vorzugsweise jeweils um ein und dieselbe Kurve, die sich lediglich durch ihr Vorzeichen voneinander unterscheiden, je nach dem, ob eine Verbraucher-/Erzeugereinheit in dem vorgegebenen Zeitraum, der z.B. einen vollständigen Tag oder auch nur einige Stunden umfassen kann, gerade Energie produziert oder aber solche verbraucht.

Nachdem jede der Berechnungseinheiten ihre jeweilige Gesamtbedarfskurve/Gesamteinspeisekurve für die ihr zugeordneten Verbraucher-/Erzeugereinheiten bestimmt hat, übermittelt sie diese an den Netzautomaten, der aus den ihm von der ersten Vielzahl von Berechnungseinheiten übersandten voraussichtlichen Gesamtbedarfskurven/Gesamteinspeisekurven eine voraussichtliche kumulierte Gesamtbedarfskurve/Gesamteinspeisekurve für die Verteilungsnetzzelle erzeugt. Anhand des Verlaufs der voraussichtlichen kumulierten Gesamtbedarfskurve/Gesamteinspeisekurve während des vorgegebenen Zeitraums überprüft der Netzautomat dann, ob der Energiefluss in der Verteilungsnetzzelle einen vorgegebenen Wert überschreitet oder nicht.

Die Erfindung besitzt den Vorteil, dass jede Verteilungsnetzzelle einen eigenständigen Regelkreis bildet, wobei die Regelkreise wiederum untereinander zu einem Gesamtsystem verbunden sind. Alle Regelkreise besitzen als selbstoptimierende Netzzellen eine analoge Ausstattung mit den Elementen eines Energieversorgungssystem (Erzeuger, Verbraucher, Speicher, Netzbetriebsmittel), verfügen über die Fähigkeit zur autonomen Handlung und stellen sich in der Außensicht als Quelle für Energieeinspeisung sowie auch als Senke für Energiebezug zu benachbarten Regelkreisen dar.

Da die Verteilungsnetzzellen erfindungsgemäß derart geregelt werden, dass ein hohes Maß an Selbständigkeit entsteht, kann der Energiefluss zwischen benachbarten Verteilungsnetzzellen innerhalb des Stromnetzes reduziert werden. Damit werden innerhalb des Verteilungsnetzes Kostenersparnisse erzielt, da ein weiterer Ausbau des Verteilungsnetzes bei einem steigenden Anteil an dezentralen Erzeugern wie z.B. Windkraftwerken oder Photovoltaikanlagen, welche bekannter Maßen zu starken Schwankungen der eingespeisten Energiemengen führen, nicht, oder nur in einem geringeren Umfang erforderlich werden.

Nach einem weiteren der Erfindung zugrunde liegenden Gedanken ermitteln die Berechnungseinheiten die voraussichtliche Gesamtbedarfskurve/Gesamteinspeisekurve durch Addition der ihnen jeweils übersandten voraussichtlichen Lastbedarfskurven/ Einspeisekurven. Hierbei liegen die voraussichtlichen Lastbedarfskurven/Einspeisekurven jeder Verbraucher-/ Erzeugereinheit und auch die Gesamtbedarfs/Gesamteinspeisekurven bevorzugt in digitaler Form als Datensatz vor, und die Addition wird auf digitalem Wege durch Aufsummieren der Funktionswerte aller beteiligten voraussichtlichen Lastbedarfskurven/Einspeisekurven vorgenommen. Diese Ausführungsform der Erfindung besitzt den Vorteil, dass sich die Gesamtbedarfs/Gesamteinspeisekurven für einen vorgegebenen Zeitraum selbst bei Verteilungsnetzzellen mit mehreren einhundert Verbraucher-/Erzeugereinheiten mit den heutigen Rechnern in kürzester Zeit durch Aufaddieren der einem jeweiligen Zeitpunkt innerhalb des vorgegebenen Zeitraums zugeordneten Werte für den momentanen Lastbedarf, bzw. die bereit gestellte elektrische Leistung, errechnen lassen.

In entsprechender Weise bestimmt der Netzautomat die kumulierte voraussichtliche Gesamtbedarfskurve/Gesamteinspeisekurve ebenfalls durch eine Addition der ihm von den Berechnungseinheiten übersandten einzelnen voraussichtlichen Gesamtbedarfskurven/Gesamteinspeisekurven, die bevorzugt als digitale Datensätze über ein bekanntes Datennetzwerk, übersandt werden.

Für den Fall, dass ein für die Verteilungsnetzzelle definierter maximal zulässiger Leistungswert in der ermittelten kumulierten voraussichtlichen Gesamtbedarfskurve/Gesamteinspeisekurve innerhalb des vorgegebenen Zeitraums überschritten werden sollte, errechnet der erste Netzautomat eine korrigierte vorläufige Netzpreiskurve und übersendet diese bevorzugt an jede der Berechnungseinheiten in der Verteilungsnetzzelle. Die Anpassung der Netzpreiskurve wird dabei vom Netzautomaten in der Weise vorgenommen, dass das Netzentgelt um einen vorgegebenen Betrag erhöht wird, wenn der Bedarf an elektrischer Energie, der während des Zeitraums voraussichtlich von den Verbraucher/Erzeugereinheiten entnommen werden wird, höher als der maximal zulässige Wert ist.

Jede der Berechnungseinheiten ermittelt dann anhand der ihr übersandten korrigierten vorläufigen Netzpreiskurve eine korrigierte Gesamtpreiskurve für die während des vorgegebenen Zeitraums voraussichtlich benötigte oder eingespeiste Menge an elektrischer Energie und übersendet diese wiederum über die jeweilige bidirektionale Kommunikationsschnittstelle an die ihr jeweils zugeordneten Verbraucher-/Erzeugereinheiten. Bevorzugt jede der bidirektionalen Kommunikationsschnittstellen der zweiten Vielzahl von Verbraucher-/Erzeugereinheiten erzeugt daraufhin aus der korrigierten Gesamtpreiskurve eine korrigierte verbindliche Bedarfskurve/Einspeisekurve für die von der jeweiligen Verbraucher-/Erzeugereinheit in dem vorgegebenen Zeitraum benötigt oder zu liefernde elektrische Energiemenge und sendet diese anschließend an die zugehörige Berechnungseinheit zurück.

Jede der Berechnungseinheiten ermittelt dann aus den korrigierten verbindlichen Bedarfskurven/Einspeisekurven aller ihr zugeordneten Verbraucher/Erzeugereinheiten eine verbindliche Gesamtbedarfskurve/Gesamteinspeisekurve für die in dem Zeitraum voraussichtlich benötigte oder zu liefernde elektrische Leistung und übermittelt diese bevorzugt als Datensatz in digitaler Form an den Netzautomaten.

Der Netzautomat bildet im Anschluss daran aus den ihm von der ersten Vielzahl von Berechnungseinheiten übersandten verbindlichen Gesamtbedarfskurven/Geswnteinspeisekurven bevorzugt durch Addition eine kumulierte verbindliche Gesamtbedarfskurve/Gesamteinspeisekurve für die Verteilungsnetzzelle, und kontrolliert und gleicht gegebenenfalls den elektrischen Energiefluss in die Verteilungsnetzelle während des vorgegebenen Zeitraums bevorzugt auf Basis der verbindlichen kumulierten Gesamtbedarfskurve/Gesamteinspeisekurve aus.

Obgleich grundsätzlich die Möglichkeit besteht, eine weitere korrigierte vorläufige Netzpreiskurve mit einem abermals verringerten Netzentgelt zu ermitteln, wenn der Bedarf an elektrischer Energie, der während des Zeitraums voraussichtlich von den Verbraucher-/Erzeugereinheiten entnommen werden wird, nach wie vor höher als der maximal zulässige Wert ist, kann es nach einem weiteren der Erfindung zugrunde liegenden Gedanken vorgesehen sein, einigen oder allen zugeordneten Verbraucher-/Erzeugereinheiten über die jeweilige bidirektionale Kommunikationsschnittstelle vom Netzautomaten ein direktes übergeordnetes Signal zuzuführen, anhand von welchem eine oder mehrere der Verbraucher-/Erzeugereinheiten auf direktem Wege veranlasst werden in dem vorgegebenen Zeitraum eine bestimmte Menge an elektrischer Energie aus der Verteilungsnetzzelle zu entnehmen oder in diese einzuspeisen. Dies ist ebenfalls möglich, wenn sich z.B. durch eine besonders starke Sonneneinstrahlung in Verbindung mit starkem Wind die Menge an elektrischer Energie, die während des vorgegebenen Zeitraums tatsächlich erzeugt wird, plötzlich und unvorhersehbar so stark erhöht, dass der für die Verteilungsnetzzelle zulässige Maximalwert überschritten wird. Durch diesen direkten Zugriff des Netzautomaten auf die BEMIs wird somit die Gefahr eines Überschreitens der Maximalwerte in vorteilhafter Weise selbst dann ausgeschlossen, wenn aufgrund von unvorhersehbaren Ereignissen der Maximalwert ohne einen Eingriff des Netzautomaten überschritten würde. Dies gilt selbstverständlich auch für die übermäßig Entnahme von elektrischer Energie aus der Verteilungsnetzzelle, z.B. bei einem plötzlichen unvorhergesehenen Kälteeinbruch in Verbindung mit geringer Sonneneinstrahlung und plötzlicher Windstille.

Weitere Merkmale der Erfindung sind in den Unteransprüchen beschrieben.

Die Erfindung wird nachfolgend mit Bezug auf die Zeichnungen anhand einer bevorzugten Ausführungsform des Verfahrens beschrieben.

In den Zeichnungen zeigen:
- Fig. 1: eine schematische Gesamtdarstellung einer Verteilungsnetzzelle mit drei beispielhaft dargestellten Berechnungseinheiten die jeweils beispielhaft mit drei Verbraucher-/Erzeugereinheiten verbunden sind, sowie eine teilweise dargestellte benachbarte Verteilungsnetzzelle,
- Fig. 2: eine schematische Darstellung, welche die Berechnung von vorläufigen Gesamtpreiskurven von an einen Netzautomaten angeschlossenen Berechnungseinheiten sowie die weitere Übersendung von errechneten vorläufigen Gesamtpreiskurven an die Verbraucher/Erzeugereinheiten wiedergibt, und
- Fig. 3: eine schematische Darstellung der Erzeugung der kumulierten Gesamtbedarfs/Gesamteinspeisekurve aus den von den Verbraucher/Erzeugereinheiten auf Basis der vorläufigen Gesamtpreiskurven ermittelten und an die Berechnungseinheiten übersandten voraussichtlichen Lastbedarfs/Einspeisekurven.

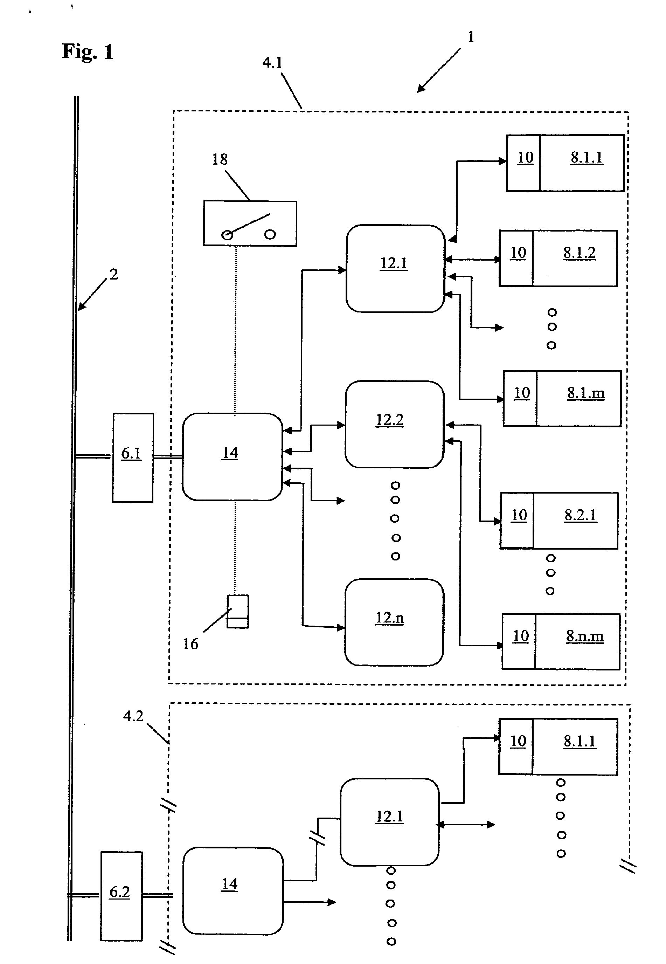

Wie in Fig. 1 gezeigt ist, umfasst ein Stromnetzwerk 1 zur Verteilung von elektrischer Energie, welche über ein schematisch angedeutetes Mittelspannungsstromnetz 2 von einem nicht näher gezeigten Großkraftwerk bereit gestellt wird, eine erste Verteilungsnetzzelle 4.1 sowie weitere Verteilungsnetzzellen, von denen der Übersicht halber lediglich eine weitere Verteilungsnetzzelle 4.2 teilweise angedeutet ist.

Bei den Verteilungsnetzzellen 4.1, 4.2 handelt es sich im dargestellten Falle um Verteilungsnetzzellen für elektrische Niederspannung, die über einen jeweiligen Transformator 6.1, 6.2 an das Mittelspannungsnetz 2 angeschlossen sind. Die Erfindung ist jedoch nicht hierauf beschränkt, so dass die Verteilungsnetzzellen in 4.1, 4.2 auf einer übergeordneten Ebene ebenfalls in analoger Weise im Mittelspannungsnetz 2 vorgesehen sein können.

Wie der Darstellung von Fig.1 weiterhin entnommen werden kann, enthält jede Verteilungsnetzzelle 4 eine Vielzahl von Verbraucher-/Erzeugereinheiten 8, beispielsweise 300 selbständige Verbraucher-/Erzeugereinheiten 8.1.1 bis 8.n.m, die jeweils über eine eigene bidirektionale Kommunikationsschnittschnelle 10, welche der Einfachheit halber als Teil der jeweiligen Verbraucher-/ Erzeugereinheit 8.1.1 bis 8.n.m gezeigt ist, über ein entsprechendes Datennetzwerk mit einer Berechnungseinheit 12.1 bis 12.n verbunden ist, die nachfolgend auch als Marktautomat bezeichnet wird, und die beispielsweise von einem nicht näher gezeigten Server Daten über den jeweiligen Stromtarif, welcher für die jeweilige Verbraucher-/ Erzeugereinheit 8.1.1 bis 8.n.m Gültigkeit besitzt, erhält. Die Berechnungseinheiten 12.1 bis 12.n werden beispielsweise durch separate Rechner oder auch Rechnereinheiten eines Großrechners realisiert. Die Anzahl der Berechnungseinheiten entspricht dabei der Anzahl der Stromanbieter multipliziert mit der Anzahl der jeweiligen Stromtarife, welche vom Stromanbieter bereitgestellt werden und für die jeweilige Verbraucher-/Erzeugereinheit maßgeblich sind.

Bei den Verbraucher-/Erzeugereinheiten 8.1.1 bis 8.n.m handelt es sich um bevorzugt selbständig geregelte Verbraucher-/Erzeugereinheiten, die über die bidirektionalen Kommunikationsschnittstellen 10 ebenfalls Preisinformationen von einem nicht näher gezeigten zentralen Rechner oder über ein Datennetzwerk, beispielsweise über das Internet, beziehen können, um den Entnahmezeitpunkt sowie auch die von ihnen zu entnehmende Menge an elektrischer Energie oder auch die von ihnen in das elektrische Leitungsnetz der Verteilungsnetzzelle eingespeiste Menge an elektrischer Energie in Abhängigkeit vom Strompreis und der Nachfrage an elektrische Energie selbständig nach ökonomischen Gesichtspunkten zu wählen.

Wie der Darstellung von Fig.1 weiterhin entnommen werden kann, sind die Berechnungseinheiten 12.1 bis 12.n jeweils über nicht näher gezeigte Datenleitungen zum Datenaustausch an einen Netzautomaten 14.1 angeschlossen, bei dem es sich um eine Recheneinheit und eine damit verbundene Vielzahl von elektrischen und elektronischen Schaltungen handelt, die den physikalischen Stromfluss innerhalb einer Verteilungsnetzzelle 4 beispielsweise mit Hilfe von in Fig. 1 lediglich schematisch angedeuteten Sensoren 16 überwachen und mittels einer Vielzahl von Schaltern 18 bei Bedarf so verändern, dass Verbindungen des physikalischen Stromnetzes innerhalb der Verteilungsnetzzelle 4.1 zu Verbraucher-/Erzeugereinheiten sowie zu anderen Verteilungsnetzzellen, hier beispielsweise zur Verteilungsnetzzelle 4.2, voneinander getrennt oder miteinander verbunden werden.

Wie in Fig.1 weiterhin nicht dargestellt ist, können die Netzautomaten 14 jeder Verteilungsnetzzelle 4.1, 4.2 ebenfalls zum Datenaustausch untereinander verbunden sein, um beispielsweise auch den Stromfluss von der Verteilungsnetzzelle 4.1 zur Verteilungsnetzzelle 4.2 zu steuern oder beispielsweise im Notfall zu sperren, je nachdem, ob innerhalb der Verteilungsnetzzelle gerade ein Überschuss an durch die Erzeugereinheiten 8.1.1 bis 8.n.m produzierter elektrischer Energie oder ein Bedarf an solcher besteht. Sowohl bei den Verbraucher-/Erzeugereinheiten 8.1.1 bis 8.n.m mit dem Regler BEMI als auch bei den Verteilungsnetzzellen 4.1, 4.2 als selbständige Einheiten mit den Reglern Netzautomat 14 und Marktautomaten 12.1 bis 12.n handelt es sich um gegenständliche Einrichtungen, die jede für sich genommen einen eigenständigen unabhängigen Regelkreis darstellen, so dass innerhalb einer jeden Einheit als solcher die Menge an momentan erzeugter elektrischer Energie und gleichzeitig verbrauchter elektrischer Energie bereits so weit wie möglich gegeneinander ausgewogen sind.

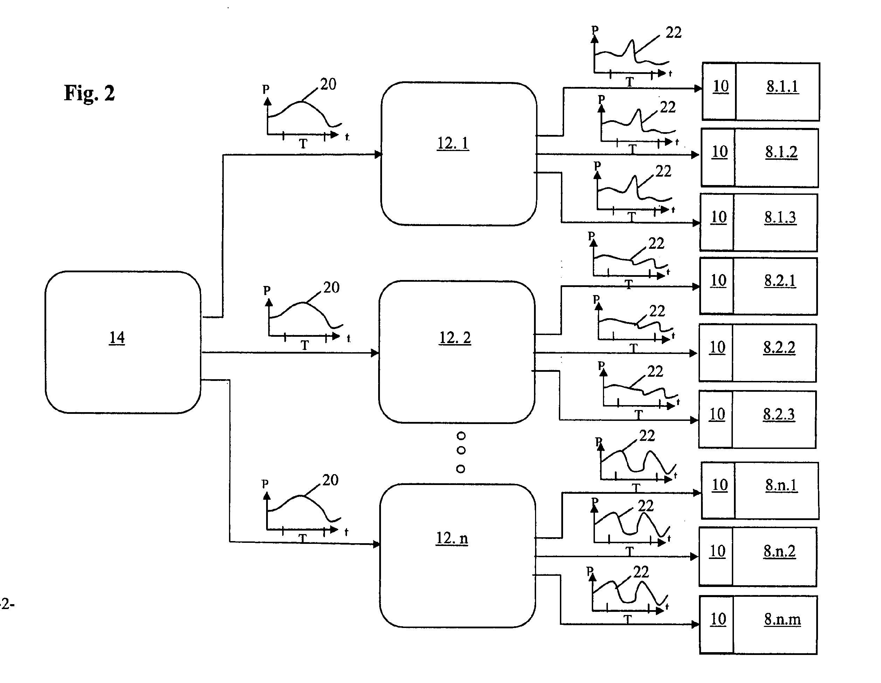

Wie der Darstellung von Fig.2 weiterhin entnommen werden kann, werden bei der Durchführung des erfindungsgemäßen Verfahrens durch die Berechnungseinheiten 12.1 bis 12.n zunächst externe Informationen von externen Datenquellen in Form von Datensätzen über den Verlauf von Markt- und Umgebungssituationen, wie z.B. Wetterinformationen, über einen vorgeschriebenen Zeitraum T eingeholt, aus denen eine prognostizierte Marktpreiskurve 20 erstellt wird, die den voraussichtlichen Verlauf des zukünftigen Strompreises am Energiemarkt innerhalb eines vorgeschriebenen Zeitraumes T darstellt. Jede der Berechnungseinheiten 12.1 bis 12.n ermittelt anhand der prognostizierten Marktpreiskurve 20 unter Berücksichtigung des für jede der zugeordneten Verbraucher-/Erzeugereinheiten 8.1.1 bis 8.n.m gültigen Stromtarifs eine entsprechende vorläufige Gesamtpreiskurve 22 für den vorgegebenen Zeitraum T, die bevorzugt auch die Netzpreiskurve für die während eines vorgegebenen Zeitraums entnommene oder eingespeiste Menge an elektrischer Energie mit einschließt, welche sie anschließend als Datensatz über die bidirektionale Kommunikationsschnittstelle 10 der zugeordneten Verbraucher-/Erzeugereinheit zuführt.

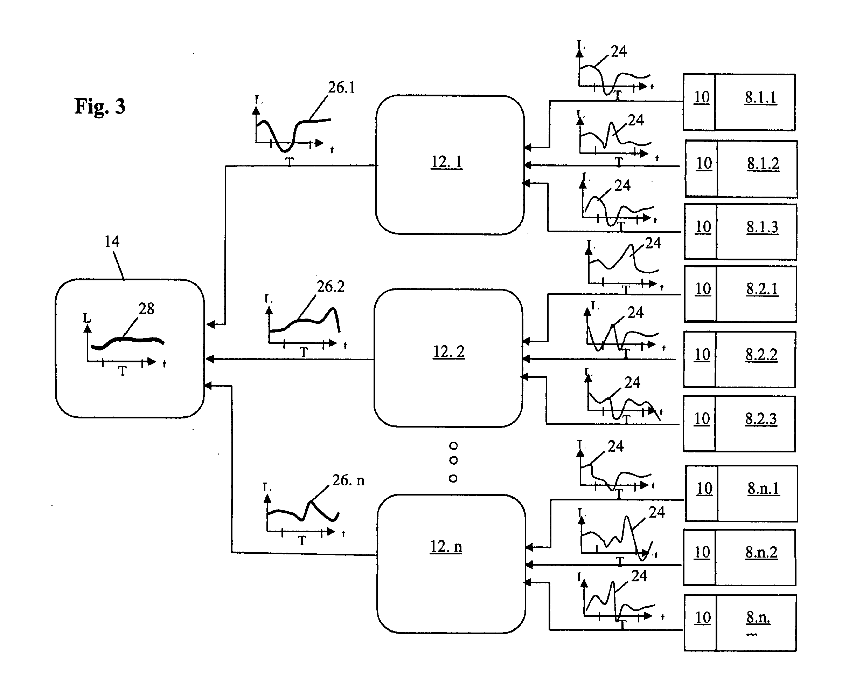

Jeder der bidirektionalen Kommunikationsschnittstellen 10 errechnet, wie in Fig. 3 weiterhin dargestellt wird, für die zugehörige Verbraucher-/Erzeugereinheiten 8.1.1 bis 8.n.m aus der vorläufigen Gesamtpreiskurve 22 aus Fig. 2 eine voraussichtliche Lastbedarfs/Einspeisekurve 24 für den vorgegebenen Zeitraum T, die die für diesen Zeitraum T voraussichtlich von der jeweiligen Verbraucher-/Erzeugereinheit 8 benötigte oder eingespeiste Menge an elektrischer Leistung umfasst. Diese voraussichtliche Lastbedarfs/Einspeisekurve 24 wird über die bidirektionale Kommunikationsschnittstelle 10 der jeweiligen Verbraucher-/Erzeugereinheiten 8.1.1 bis 8.n.m an die zugeordnete Berechnungseinheit 12.1 bis 12.n übersandt, die die voraussichtlichen Lastbedarfs/Einspeisekurven 24 der ihnen jeweils zugeordneten Verbraucher-/Erzeugereinheiten 8.1.1 bis 8.n.m aufsummieren und daraus bevorzugt durch Summation der jeweiligen Funktionswerte eine voraussichtliche Gesamtbedarfskurve/Gesamteinspeisekurve 26.1.bis 26.n errechnen. Die voraussichtliche Gesamtbedarfskurve/Gesamteinspeisekurve 26.1 bis 26.n wird anschließend in Form eines Datensatzes an den Netzautomaten 14 übersandt, der aus den Datensätzen für die in Fig. 3 beispielhaft dargestellten drei Gesamtbedarfskurven 26.1 bis 26.n durch Addition eine kumulierte Gesamtbedarfskurve/Gesamteinspeisekurve 28 berechnet, welche den voraussichtlichen Verlauf der gesamten elektrischen Leistung aller Verbraucher/Erzeugereinheiten der Verteilungsnetzzelle 4 innerhalb des Zeitraums T wiedergibt, der selbstverständlich frei wählbar ist und einen vollständigen Tag, z.B. den folgenden Tag bezogen auf das Übersendungsdatum des Datensatzes, umfassen kann.

Der Netzautomat überprüft hierbei in erfindungsgemäßer Weise ebenfalls, ob der Energiefluss innerhalb der Verteilungsnetzzelle 4, der in dem vorgegebenen Zeitraum T durch den Verlauf der kumulierten Gesamtbedarfskurve/Gesamteinspeisekurve 28 wiedergegeben wird, einen vorgegebenen maximalen Wert für den elektrischen Stromfluss innerhalb der Verteilungsnetzzelle 4 überschreitet. Dies kann beispielsweise dadurch erfolgen, dass überprüft wird, ob beispielsweise der maximale Wert für die innerhalb des vorgegebenen Zeitraums T entnommene elektrische Leistung einen Maximalwert überschreitet oder nicht.

Sofern dies der Fall sein sollte, errechnet der Netzautomat 14 eine korrigierte vorläufige Netzpreiskurve, die im Falle eines voraussichtlich zu hohen Leistungsbedarfs innerhalb des vorgegebenen Zeitraums T einen erhöhten Netzpreis für die elektrische Energie vorsieht. Der korrigierte Netzpreis wird durch den Netzautomaten 14 anschließend in gleicher Weise wie zuvor unter Bezugnahme auf Fig. 2 beschrieben, als digitaler Datensatz an die Berechnungseinheiten 12.1 bis 12.n übersandt, die mittels der neuen Netzpreiskurve anhand der jeweils für ihre angeschlossenen Verbraucher-/ Erzeugereinheit 8.1.1 bis 8.n.m maßgeblichen Stromtarife eine neue korrigierte Gesamtpreiskurve errechnen, und diese über die bidirektionalen Kommunikationsschnittstellen 10 an die zugeordneten Verbraucher-/ Erzeugereinheit 8.1.1 bis 8.n.m übersenden. Jeder der bidirektionalen Kommunikationsschnittstellen 10 errechnet anhand der korrigierten Gesamtpreiskurve anschließend eine korrigierte verbindliche Lastbedarfs/Einspeisekurve für die von der jeweiligen Verbraucher-/ Erzeugereinheit 8.1.1 bis 8.n.m in dem vorgegebenen Zeitraum T benötigte oder bereitgestellte Energiemenge und übersendet diese zurück an die Berechnungseinheit 12.1 bis 12.n, die daraus bevorzugt durch Addition der jeweiligen Funktionswerte eine korrigierte verbindliche Gesamtbedarfskurve/Gesamteinspeisekurve errechnet, welche wiederum in Form eines digitalen Datensatzes von jeder der Berechnungseinheiten 12.1.bis 12.n an den Netzautomaten 14 übersandt wird. Der Netzautomat 14 addiert die verbindlichen Gesamtbedarfskurven/Gesamteinspeisekurven auf und bildet aus diesen eine verbindliche kumulierte Gesamtbedarfskurve/Gesamteinspeisekurve, anhand von welcher gegebenenfalls Maßnahmen getroffen werden, um den Stromfluss innerhalb der Verteilungsnetzzelle so zu verändern, dass Störungen der elektrischen Energieversorgung, wie beispielsweise Überspannungen oder unerwünschte Frequenzverschiebungen sowie Ungleichgewichte von Energielieferung und Energiebezug, vermieden oder ausgeglichen werden.

### Liste der Bezugszeichen

- 1: Stromnetzwerk
- 2: Mittelspannungsnetzwerk
- 4.1: Erste Verteilungsnetzzelle
- 4.2: Zweite Verteilungsnetzzelle
- 6.1: Transformator
- 6.2: Transformator
- 8.1.1 - 8.n.m: Verbraucher-/Erzeugereinheiten
- 10: Bidirektionale Kommunikationsschnittstelle (BEMI)
- 12.1 - 12.n: Berechnungseinheiten
- 14: Netzautomat
- 16: Sensor
- 18: Schalter
- 20: Prognostizierte Marktpreiskurve
- 22: Vorläufige Gesamtpreiskurve
- 24: Voraussichtliche Lastbedarfs/Einspeisekurve
- 26.1 - 26.n: Gesamtbedarfskurve/Gesamteinspeisekurve
- 28: Kumulierte Gesamtbedarfskurve

## Patentansprüche

1. Verfahren zur Verteilung von elektrischer Energie in einem Stromnetzwerk (1) mit einer Vielzahl von selbständig führbaren Verteilungsnetzzellen (4.1, 4.2), von denen eine jede Verteilungsnetzzelle eine Vielzahl von selbständigen elektrischen Verbraucher-/Erzeugereinheiten (8.1.1 bis 8.n.m) enthält, die elektrische Energie aus der Verteilungsnetzzelle (4.1, 4.2) entnehmen und/oder in die Verteilungsnetzzelle (4.1, 4.2) einspeisen, und die jeweils über eine bidirektionale Kommunikationsschnittstelle (10) Informationen in Form von Preis-/Anreizkurven und Bedarfs-/Bereitstellungskurven mit einer dezentralen Berechnungseinheit austauschen,
**dadurch gekennzeichnet, dass**
jede Verteilungsnetzzelle (4.1, 4.2) jeweils einen Netzautomaten (14) aufweist, dem eine erste Vielzahl von eigenständigen Berechnungseinheiten (12.1 bis 12.n) zugeordnet ist, von denen eine jede Berechnungseinheit (12.1 bis 12.n) jeweils über eine bidirektionale Kommunikationsschnittstelle (10) mit einer zweiten Vielzahl von Verbraucher-/Erzeugereinheiten (8.1.1 bis 8.n.m) verbunden ist, dass jede der ersten Vielzahl von Berechnungseinheiten (12.1 bis 12.n) auf der Basis prognostizierter Marktpreiskurven (20) eine der Verbraucher-/Erzeugereinheit (8.1.1 bis 8.n.m) zugeordnete vorläufige Gesamtpreiskurve (22) für die während eines vorgegebenen Zeitraums (T) entnommene oder eingespeiste Menge an elektrischer Energie ermittelt und diese der zweiten Vielzahl von zugeordneten Verbraucher/Erzeugereinheiten (8.1.1 bis 8.n.m) über die jeweilige bidirektionale Kommunikationsschnittstelle (10) zuführt, dass jede der bidirektionalen Kommunikationsschnittstellen (10) aus der vorläufigen Gesamtpreiskurve (22) eine voraussichtliche Lastbedarfs/Einspeisekurve (24) für die von der jeweiligen Verbraucher-/Erzeugereinheit (8.1.1 bis 8.n.m) in dem vorgegebenen Zeitraum (T) benötigte oder angebotene elektrische Leistung ermittelt und diese zurück an die zugehörige Berechnungseinheit (12.1 bis 12.n) übersendet, dass jede der ersten Vielzahl von Berechnungseinheiten (12.1 bis 12.n) aus den voraussichtlichen Lastbedarfskurven/Einspeisekurven (24) aller ihr zugeordneten Verbraucher-/Erzeugereinheiten (8.1.1 bis 8.n.m) eine Gesamtbedarfskurve/Gesamteinspeisekurve (26.1 bis 26.n) für die in dem Zeitraum voraussichtlich benötigte oder gelieferte Menge an elektrischer Energie bestimmt, dass jede der ersten Vielzahl von Berechnungseinheiten (12.1 bis 12.n) die von ihr bestimmte Gesamtbedarfskurve/Gesamteinspeisekurve (26.1 bis 26.n) an den Netzautomaten (14) übermittelt, und dass der Netzautomat (14) aus den ihm von der ersten Vielzahl von Berechnungseinheiten (12.1 bis 12.n) übersandten voraussichtlichen Gesamtbedarfskurven/Gesamteinspeisekurven (26.1 bis 26.n) eine kumulierte Gesamtbedarfskurve/Gesamteinspeisekurve (28) für die Verteilungsnetzzelle (4.1, 4.2) bestimmt und auf Basis von dieser ermittelt, ob der prognostizierte Energiefluss in der Verteilungsnetzzelle (4.1, 4.2) einen vorgegebenen Wert überschreitet.

2. Verfahren nach Anspruch 1,
**dadurch gekennzeichnet,**
**dass** die Berechnungseinheiten (12.1 bis 12.n) die voraussichtliche Gesamtbedarfskurve/Gesamteinspeisekurve (26.1 bis 26.n) durch Addition der ihnen von den jeweils zugeordneten Verbraucher/Erzeugereinheiten (8.1.1 bis 8.n.m) übersandten voraussichtlichen Lastbedarfskurven/ Einspeisekurven (24) ermitteln.

3. Verfahren nach Anspruch 1 oder 2,
**dadurch gekennzeichnet,**
**dass** der Netzautomat (14) die kumulierte voraussichtliche Gesamtbedarfskurve/Gesamteinspeisekurve (28) durch Addition der ihm übersandten einzelnen voraussichtlichen Gesamtbedarfskurven/Gesamteinspeisekurven (26.1 bis 26.n) ermittelt.

4. Verfahren nach einem der vorhergehenden Ansprüche,
**dadurch gekennzeichnet,**
**dass** der Netzautomat (14) beim Überschreiten eines vorgegebenen maximal zulässigen Leistungswertes in der ermittelten kumulierten voraussichtlichen Gesamtbedarfskurve/Gesamteinspeisekurve (28) eine korrigierte vorläufige Netzpreiskurve ermittelt und diese an jede der ersten Vielzahl von Berechnungseinheiten (12.1 bis 12.n) übersendet, und dass jede der Berechnungseinheiten (12.1 bis 12.n) anhand der korrigierten vorläufigen Netzpreiskurve eine korrigierte Gesamtpreiskurve für die während des vorgegebenen Zeitraums (T) voraussichtlich benötigte oder eingespeiste Menge an elektrischer Energie ermittelt und diese der zweiten Vielzahl von zugeordneten Verbraucher/Erzeugereinheiten (8.1.1 bis 8.1.n) über die jeweilige bidirektionale Kommunikationsschnittstelle (10) zuführt.

5. Verfahren nach Anspruch 4,
**dadurch gekennzeichnet,**
**dass** jede der bidirektionalen Kommunikationsschnittstellen (10) oder jeder der Verbraucher-/Erzeugereinheiten (8.1.1 bis 8.n.m.) aus der korrigierten Gesamtpreiskurve eine korrigierte verbindliche Bedarfskurve/ Einspeisekurve für die von der jeweiligen Verbraucher/Erzeugereinheit (8.1.1 bis 8.n.m) in dem vorgegebenen Zeitraum (T) benötigte oder zu liefernde elektrische Energiemenge ermittelt und diese zurück an die zugehörige Berechnungseinheit (12.1 bis 12.n) übersendet.

6. Verfahren nach Anspruch 5,
**dadurch gekennzeichnet,**
**dass** jede der ersten Vielzahl von Berechnungseinheiten (12.1 bis 12.n) aus den korrigierten verbindlichen Bedarfskurven oder Einspeisekurven (Fahrplan) aller ihr zugeordneten Verbraucher/Erzeugereinheiten (8.1.1 bis 8.n.m) eine verbindliche Gesamtbedarfskurve/ Gesamteinspeisekurve für die in dem Zeitraum (T) voraussichtlich benötigte oder zu liefernde elektrische Leistung bestimmt und diese an den Netzautomaten (14) übermittelt, und dass der Netzautomat (14) aus den ihm von der ersten Vielzahl von Berechnungseinheiten (12.1 bis 12.n) übersandten verbindlichen Gesamtbedarfskurven/ Gesamteinspeisekurven eine kumulierte verbindliche Gesamtbedarfskurve/Gesamteinspeisekurve für die Verteilungsnetzzelle (14.1,14.2) bestimmt und den elektrischen Energiefluss in die Verteilungsnetzelle (14.1,14.2) während des vorgegebenen Zeitraums (T) auf Basis der verbindlichen kumulierten Gesamtbedarfskurve/Gesamteinspeisekurve regelt.

7. Verfahren nach einem der vorhergehenden Ansprüche,
**dadurch gekennzeichnet,**
**dass** der zweiten Vielzahl von zugeordneten Verbraucher/Erzeugereinheiten (8.1.1 bis 8.n.m) über die jeweilige bidirektionale Kommunikationsschnittstelle (10) vom Netzautomaten (14) ein direktes übergeordnetes Signal zuführbar ist, anhand von welchem eine oder mehrere der Verbraucher/Erzeugereinheiten (8.1.1 bis 8.n.m) auf direktem Wege veranlasst werden, in dem vorgegebenen Zeitraum (T) eine bestimmte Menge an elektrischer Energie aus der Verteilungsnetzzelle (4.1, 4.2) zu entnehmen oder in diese einzuspeisen.
